# EUROPEAN PATENT SPECIFICATION

(11) **EP 1 269 294 B1**
(45) Date of publication and mention of the grant of the patent: **20.10.2004**
(21) Application number: 01918029.8
(22) Date of filing: 08.03.2001
(51) Int. Cl.: G06F 1/16, E05B 73/00

(54) **LOCKABLE SAFETY BOX FOR COMPUTERS**
VERRIEGELBARE SICHERHEITSBOX FÜR COMPUTER
COFFRET DE SECURITE VERROUILLABLE DESTINE A DES ORDINATEURS

(30) Priority: 10.03.2000 US 188542 P
(43) Date of publication of application: 02.01.2003
(73) Proprietor: Janson, Marie-Louise, 432 32 Varberg (SE)
(72) Inventor: Janson, Marie-Louise, 432 32 Varberg (SE)
(74) Representative: Söderman, Päivi Karin Lisbeth
(86) International application number: PCT/SE2001/000498
(87) International publication number: WO 2001/067217

(56) References cited:
- US-A- 4 585 202
- US-A- 5 642 634
- US-A- 6 138 483
- US-A- 6 166 910

## Description

### Technical Field

The present invention relates to a lockable safety box for a computer wherein the size of the safety box is adjustable to the size of the computer.

### Background and summary of the invention

An increasing problem in today's computerized society is theft of the relatively small and light-weight personal computers. Not only are the personal computers valuable but they often contain information that is more valuable than the computer units themselves. Some computers contain information that is even irreplaceable should the computer be stolen. A variety of alarm solutions have been provided and developed in the past. However, one inherent drawback of all alarm systems is that they almost always must be powered with electricity and the alarms do not work properly if the electricity is cut off from the alarm unit. There is a need for a reliable device that prevents unauthorized removal of a computer from a work unit without relying on complicated alarm systems.

The present invention is a lockable safety box for computers comprising a frame that has size adjustable side panels. A front rod is inserted through the front openings and has an outer end that has an opening defined therein. A back rod is inserted through the rear openings and has an outer end with an opening defined therein. A side bar has an outwardly protruding lock pin for engaging the front rod and an internal pin for engaging the back rod. The front rod and the back rod extend across the front and rear openings of the frame so that a computer disposed inside the frame may not be removed therefrom when the bars are locked together.

### Brief Description of the Drawings

Fig. 1 is a perspective front view of the safety box of the present invention;
Fig. 2 is an exploded view of the side components of the safety box;
Fig. 3 is a side view of a female component of a locking rod;
Fig. 4 is a side view of a male component of the locking rod;
Fig. 5 is a side view of a sleeve for the female component of Fig. 3;
Fig. 6 is a side view of a sleeve for the male component of Fig. 4;
Fig. 7 is a side view of the female and male components enclosed by the sleeves, the components are in an almost fully extended position;
Fig. 8 is an expanded perspective view of the side bar in operative engagement with the locking rods and the lock unit;
Fig. 9 is a perspective view of an alternative embodiment of a locking rod; and
Fig. 10 is a perspective view of a table and the fastening mechanisms attached to an underside thereof.

### Detailed Description

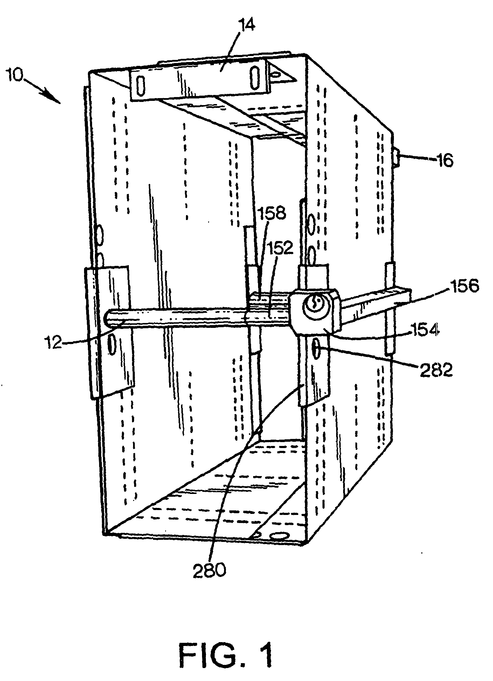

With reference to Figs. 1-10, the present invention is a lockable safety box 10 that has an adjustable size and is made of a metal or any other sturdy material. The size of the box may be customized to the computer disposed inside the box so that the box tightly fits around the computer. The desired size of the box 10 may be locked by a locking mechanism 12. The box 10 has an adjustable front fastening mechanism 14 and an adjustable rear fastening mechanism 16.

The locking mechanism 12 has a front rod 152 removable attached to a lock 154 and a side bar 156 removably attached to the lock 154. A back rod 158 is removably attached to the side bar 156. All the rods and the lock are preferably made of a hardened steel but any other very tough and hard material may be used so that a computer disposed inside the box 10 may be locked in place by the rods to prevent removal of the computer 10.

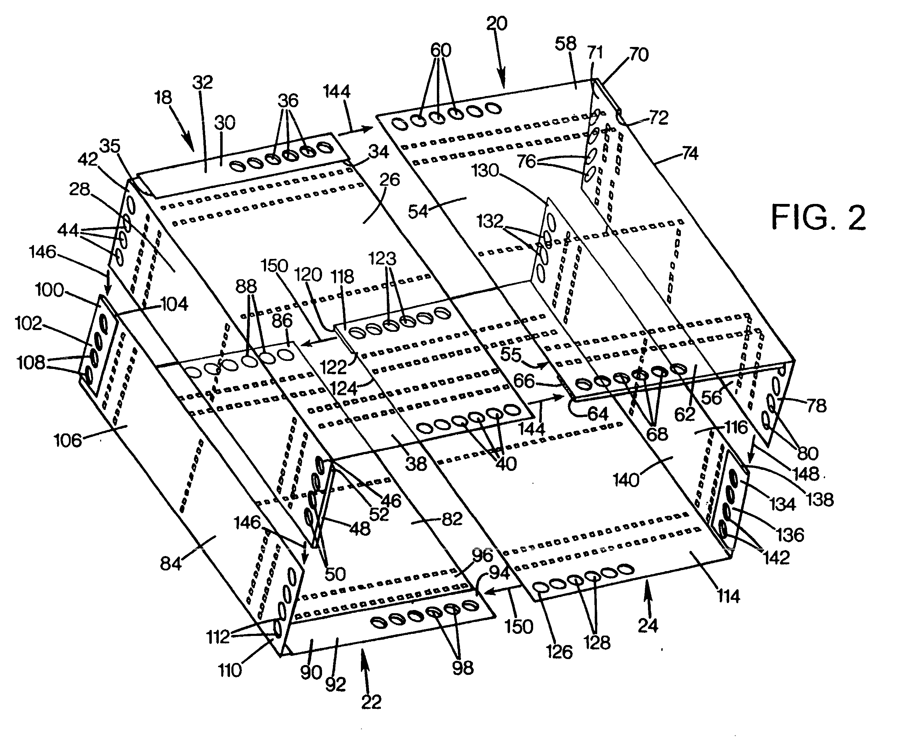

With reference to Fig. 2, the box 10 has four side components 18, 20, 22 and 24. The component 18 has a side wall 26 and an upper wall 28 that is perpendicular to the side wall 26. A front edge 30 of the side wall 26 has a plate 32 folded outwardly so that a groove 34 is defined between an outside 35 of the side wall 26 and the plate 32. The plate 32 and the front edge 30 have a plurality of openings 36 defined therein. A back edge 38 has a plurality of openings 40 defined therein that are aligned with the openings 36. Preferably, the back edge 38 does not have a plate in operative engagement therewith. The upper wall 28 has a front edge 42 that has a plurality of openings 44 defined therein. A back edge 46 of the upper wall 28 has a plate 48 folded inwardly so that a groove 52 is defined between the plate 48 and an inside of the upper wall 28. The plate 48 and the back edge 46 define a plurality of openings 50.

The component 20 has a side wall 54 and a lower wall 56 that is perpendicular to the side wall 54. A front edge 58 of the side wall 54 has a plurality of openings 60 defined therein. The distance between the openings 60 and the size of the openings 60 are the same as the openings 36 of the component 18. A back edge 62 has a plate 64 folded inwardly so that a groove 66 is defined between an inside 55 of the side wall 54 and the plate 64. The plate 64 and the back edge 62 have a plurality of openings 68 defined therein. The distance between the openings 68 and the size of the openings 68 are the same as the openings 40 of the component 18. The lower wall 56 has a front edge 71 that has a plate 70 folded outwardly so that a groove 72 is defined between the plate 70 and an outside 74 of the lower wall 56. The plate 70 and the lower wall 56 have a plurality of openings 76 defined therein. A back edge 78 of the lower wall 56 has a plurality of openings 80 defined therein.

The component 22 has a side wall 82 and an upper wall 84 that is perpendicular to the side wall 82. A front edge 86 of the side wall 82 has a plurality of openings 88 defined therein. A back edge 90 has a plate 92 folded inwardly so that a groove 94 is defined between an inside 96 of the side wall 82 and the plate 92. The plate 92 and the back edge 90 have a plurality of openings 98 defined therein. The upper wall 84 has a front edge 100 that has a plate 102 folded outwardly so that a groove 104 is defined between the plate 102 and an outside 106 of the upper wall 84. The plate 102 and the upper wall 84 have a plurality of openings 108 defined therein. A back edge 110 of the upper wall 84 has a plurality of openings 112 defined therein.

The component 24 has a side wall 114 and a lower wall 116 that is perpendicular to the side wall 114. A front edge 118 of the side wall 114 has a plate 120 folded outwardly so that a groove 122 is defined between an outside 124 of the side wall 114 and the plate 120. The plate 120 and the front edge 118 have a plurality of openings 123 defined therein. A back edge 126 has a plurality of openings 128 defined. The distance between the openings 122 and the size of the openings 122 are the same as the openings 88 of the component 22. The back edge 126 does not have a plate. The lower wall 116 has a front edge 130 having a plurality of openings 132 defined therein. The distance between the openings 132 and the size of the openings 132 are the same as the openings 76 of the component 20. A back edge 134 of the lower wall 116 has a plate 136 folded inwardly so that a groove 138 is defined between the plate 136 and an inside 140 of the lower wall 116. The plate 136 and the back edge 134 define a plurality of openings 142. The distance between the openings 142 and the size of the openings 142 are the same as the openings 80 of the component 20.

The components 18, 20, 22 and 24 may be assembled to form the box 10 that has an adjustable size. The component 18 may be pushed into the component 20, as shown by the arrows 144, so that the front edge 58 fits into the groove 34 of the component 18 and the back edge 38 fits into the groove 64 of the component 20. The height of the box 10 may be adjusted by sliding the component 18 toward the component 20 until the openings 36 are aligned with the openings 60 and the openings 40 are aligned with the openings 68.

Similarly, the component 18 may be pushed into the component 22, as shown by the arrows 146, so that the front edge 42 is inserted into the groove 104 and the back edge 110 of the component 22 is inserted into the groove 52 of the component 18. The width of the box 10 may be adjusted by sliding the component 18 toward the component 22 until the openings 44 are aligned with the openings 108 and the openings 50 are aligned with the openings 112. In a similar way, the component 20 may be pushed into the component 24, as shown by the arrow 148, and the component 24 may be pushed into the component 22, as shown by the arrows 150, to form the rectangular shaped box 10.

Because both the height and the width of the box 10 are adjustable, the size of the box 10 may be adjusted to the size of the computer to be placed inside the box. It is an important feature of the present invention to be able to adjust the size of the safety box 10 to fit the size of the computer disposed inside the safety box 10. The tighter the safety box 10 is around the computer to be protected, the harder it is to break into the computer.

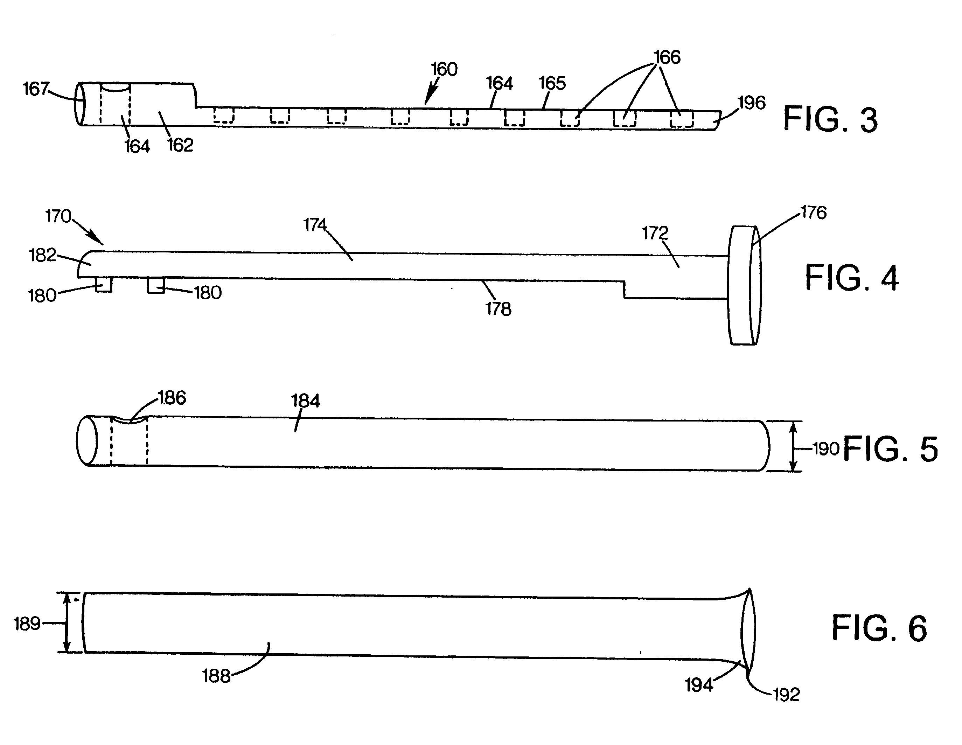

Fig. 3 shows a detailed view of an elongate round female rod 160 of the front rod 152. The rod 160 has a large diameter section 162 and a reduced diameter section 164 with a flat upper surface 165. The section 162 and a hole 164 defined therein that is adjacent to a short end 167 of the rod 160. The surface 165 of the section 164 has a plurality of cavities 166 defined therein. The distance between the cavities 166 may be about 14 millimeters or any other suitable distance.

As best shown in Fig. 4, the front rod 152 also has a male rod 170 that has a large diameter section 172 and a reduced diameter section 174. A top stopper 176 is attached to the section 172 at an end of the rod 170 that is opposite the short end 167 of the female rod 160. The stopper 176 has a diameter that is greater than the diameter of the section 172 and the openings defined in the components of the safety box 10. The section 174 has a length that may be about the same as the length of the section 164 of the female rod 160. The section 174 has a flat bottom surface 178. A pair of pins 180 are attached to the surface 178 at an outer end 182 of the rod 170. It should be understood that the number of pins may be greater or fewer than two pins. For example, one pin may be used or a plurality of pins may be used. The distance between the pins 180 should be about the same as the distance between the cavities 166 so that the pins 180 may be inserted into the cavities 166.

The length of the front rod 152 may be adjusted depending on which of the cavities 166 that the pins 180 are inserted into. This is an important feature because the width of the box 10 may be adjusted, as described above.

To further improve the integrity and strength of the front rod 152, the assembled female rod 160 and the male rod 170 may be inserted into a sleeve 184, as best shown in Fig. 5, so that an opening 186 defined in the sleeve 184 is aligned with the opening 164 of the female rod 160. This means, that the male rod 170 may protrude outwardly from the sleeve 184.

As best shown in Figs. 6-7, a sleeve 188, that has an inner diameter 189 that is greater than an outer diameter 190 of the sleeve 184, may be pulled over the sleeve 184. The sleeve 188 has a large diameter collar 192 at an outer end 194 of the sleeve 188 that is distal from the opening 186 of the sleeve 184. The collar 192 is intended to bear against the stopper 176 of the rod 170 and is sized not to undesirably penetrate the openings of the components of the safety box. The effective length of the sleeves 184, 188 may be adjusted by sliding the sleeve 184 relative to the sleeve 188 to make sure the sleeves cover the rods 160, 170 even though the rods 160, 170 are shifted to a maximum length. In other words, when the pins 180 are inserted into the cavities 166 that are adjacent to an outer end 196 of the rod 160. The lengths of the sleeves 184, 188 are such that the rods 160, 170 will never be exposed even though the rods are fully extended relative to one another.

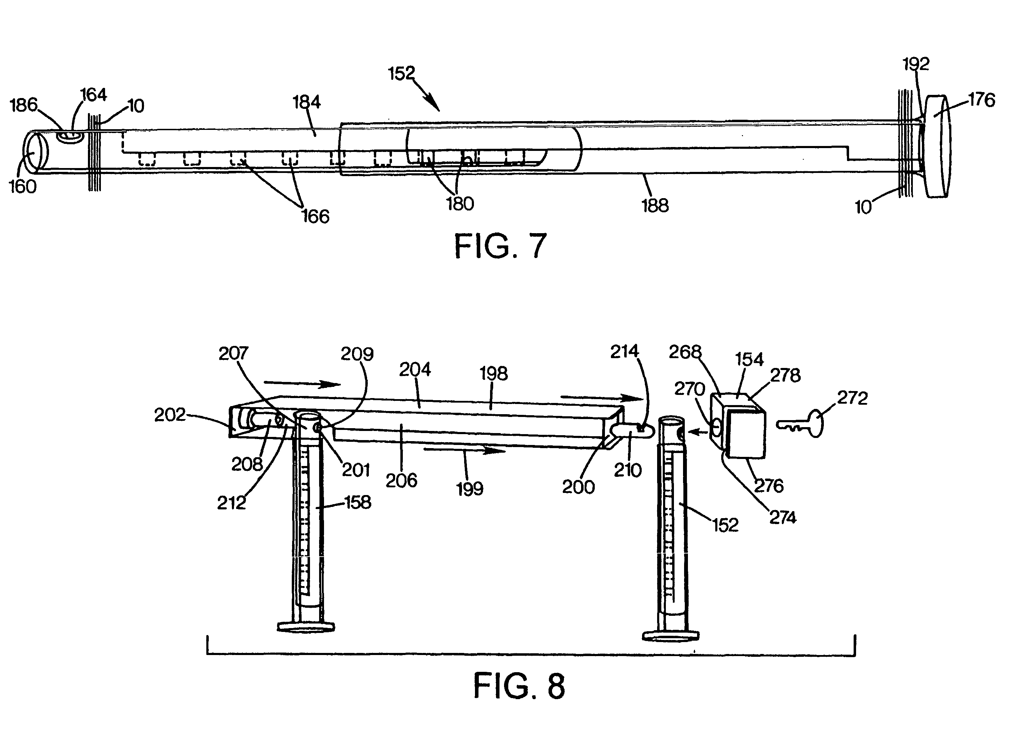

Fig. 7 shows the front rod 152 in almost a fully extended position. The back rod 158 is virtually identical to the front rod 152 and is not described in detail.

Fig. 8 shows a rectangular or U-shaped side bar 198. It should be understood that the bar 198 may have any suitable shape including, but not limited to, round and oval shapes. The bar 198 has a front wall 200 and a back wall 202 and a U-shaped side wall 204 disposed therebetween so that an open side 206 is defined therein. The back wall 202 has an inwardly protruding locking pin 208 and the front wall 200 has an outwardly protruding locking pin 210 so that the pins 208, 210 extend in the same direction and the pin 208 extends into the chamber 212 that is defined in the bar 198. The pin 210 has a groove 214 extending across the pin 210.

The bar 198 may be mounted to the front bar 152 and the rear bar 158. For simplicity, the safety box 10 is not shown in Fig. 8. The assembly of the locking mechanism is described in more detail below.

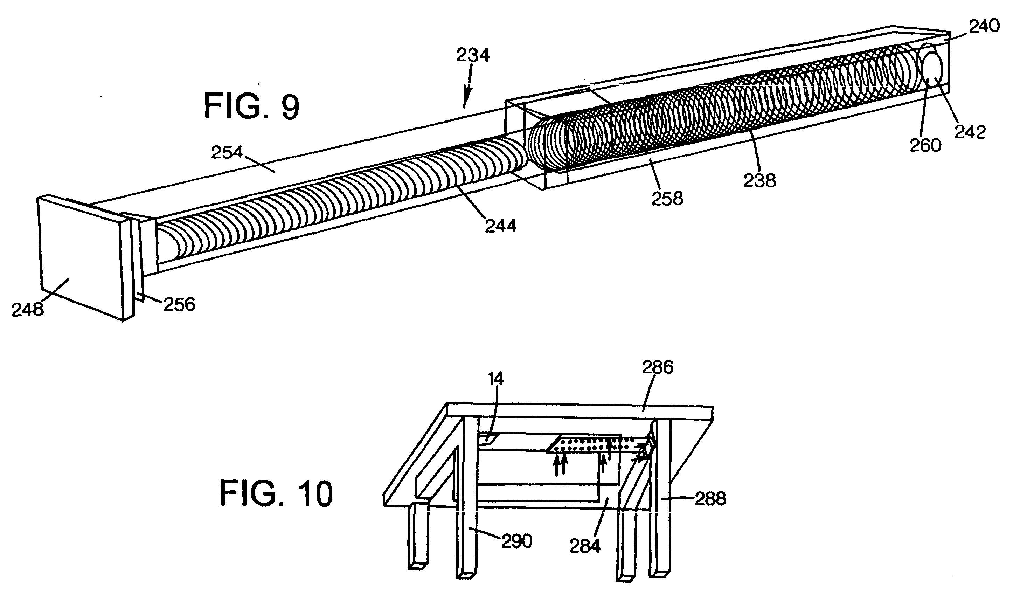

Fig. 9 shows an alternative embodiment of a locking rod 234 that has a square or rectangular shaped sleeve 258 with an internally threaded inner wall 238. An outer end 240 of the sleeve 258 has an opening 242 extending therethrough for engaging a lock. A threaded male rod 244 may be screwed into the sleeve 258. An opposite end of the rod 244 has a square seat 256 and a square stopper 248. Because the sleeve 258 and the seat 256 are square or rectangular, they cannot be turned inside the square openings that may be defined in the box.

Referring back to Fig. 8, the pin 210 is inserted through the opening 164 of the rod 160 and the opening 186 of the sleeve 184 when the opening 186 is aligned with the opening 164 when the side bar 198 is moved in the direction of the arrow 199. The pin 210 is then inserted into the opening 270 of the lock 154. A plate inside the lock 154 may engage the groove 214 by turning a key 272 inserted into the lock 154. Simultaneously, the pin 208 engages and extends through an opening 201 of the locking rod 158.

The lock 154 has a groove 274 extending from a bottom side 276 to a top side 278 of the lock 154 so that the lock 154 may be attached to the safety box 10 and is very difficult to break away or remove from the safety box 10. As best shown in Fig. 1, a folded break protector 280 may engage the front end of the box 10. The protector 280 has at least two openings 282 defined therein. The size of the openings 282 are designed to receive the front lock rod 152. One function of the protector 280 is to further improve the strength of the box 10. Preferably, box 10 is equipped with similar protectors wherever the locking mechanism is engaging the box 10, as clearly shown in Fig. 1.

With reference to Fig. 10, the box 10 may be attached to a furniture such as to an underside 284 of a table 286. The rear fastening mechanism 16 may be fastened to a metal frame 288 of the table 286 with one way screws. The box 10 may also be fastened to the underside 284 itself with a plurality of screws or other fasteners. The length of the mechanism 16 is adjustable. The front fastening mechanism 14 may, in a similar manner, be fastened to a metal frame 290 of the table 286.

When the safety box is adjusted to the correct size, it may be attached to the underside of the table with the fastening mechanisms. The length of the fastening mechanism is adjusted to the size of the metal frame of the table. The computer to be protected is then inserted into the safety box 10 and the locking mechanism 12 is attached and locked to the safety box 10 as described above. If it is necessary to remove the computer from the safety box 10, the reverse procedure is used. The locking mechanism is unlocked with the lock 154 and the locking bars are removed so that the computer may slide out of the safety box.

## Claims

1. A lockable safety box for computers, comprising:
a frame (10) having the side panels (18, 20, 22, 24) having opposite front openings (36, 60, 282) defined therein and opposite rear openings (40, 68) defined therein;
a front rod (152) inserted through the front openings (36, 60, 282) defined in the side panels, the front rod (152) having an outer end (167), the outer end (167) of the front rod (152) having an opening (164, 186) defined therein;
a back rod (158) inserted through the rear openings (40, 68) defined in the side panels, the back rod (158) having an outer end (207), the outer end (207) of the back rod (158) having an opening (201) defined therein; and
a side bar (156, 198) having an outwardly protruding lock pin (210), the lock pin (210) being inserted through the opening (164, 186) of the outer end of the front rod (152), the side bar having a rear opening (209) defined therein and an internal pin (208) protruding inwardly into the side bar, the internal pin being inserted through the opening (201) of the outer end (207) of the back rod (158), the outer end of the back rod being inserted into the rear opening of the side bar (156, 198).

2. The lockable safety box according to claim 1 wherein the lock pin (210) protrudes through the opening of the outer end of the front rod (152) and is inserted into an opening (270) defined in a lock unit (154).

3. The lockable safety box according to claim 1 wherein the front rod (152) has a male section (170) with a tooth (180) and a female section (160) with a cavity (166) that is adapted to receive the tooth of the male section.

4. The lockable safety box according to claim 1 wherein the side panel (18) is slidably engaging the side panel (22) and the side panel (20) to adjust a size of the frame (10).

5. The lockable safety box according to claim 1 wherein the front bar (152) has an enlarged outer end (176) to prevent the front bar from sliding through an opening defined in the frame (10).

6. The lockable safety box according to claim 3 wherein the front bar (152) comprises a first sleeve (184) to receive and hold the male section (170) in operative engagement with the female section (160).

7. The lockable safety box according to claim 6 wherein the front bar (152) comprises a second sleeve (188) for receiving the first sleeve (184).

8. The lockable safety box according to claim 1 wherein the frame (10) is attachable to an underside (284) of a table (286).

9. The lockable safety box according to claim 1 wherein the frame (10) has a break protector (280) attached thereto.

10. The lockable safety box according to claim 1 wherein the front bar (152), the back bar (158) and the side bar (156, 198) are attached to one another at an outside of the frame (10).

## Patentansprüche

1. Verriegelbare Sicherheitsbox für Computer, bestehend aus:
einem Rahmen (10) mit den Seitenpaneelen (18, 20, 22, 24), die darin ausgebildete, einander gegenüber liegende vordere Öffnungen (36, 60, 282) und darin ausgebildete, einander gegenüber liegende hintere Öffnungen (40, 68) aufweisen;
einer durch die in den Seitenpaneelen ausgebildeten vorderen Öffnungen (36, 60, 282) durchgesteckten vorderen Stange (152), welche vordere Stange (152) ein äußeres Ende (167) hat, welches äußere Ende (167) der vorderen Stange (152) eine darin ausgebildete Öffnung (164, 186) aufweist;
einer durch die in den Seitenpaneelen ausgebildeten hinteren Öffnungen (40, 68) hindurchgesteckten hinteren Stange (158), welche hintere Stange (158) ein äußeres Ende (207) hat, welches äußere Ende (207) der hinteren Stange (158) eine darin ausgebildete Öffnung (201) aufweist; und
einer Seitenstange (156, 198) mit einem auswärts herausragenden Sicherungsstift (210), welcher Sicherungsstift (210) durch die Öffnung (164, 186) am äußeren Ende der vorderen Stange (152) eingesetzt wird, welche Seitenstange eine darin ausgebildete hintere Öffnung (209) und einen einwärts in die Seitenstange hineinragenden inneren Stift (208) aufweist, welcher innere Stift durch die Öffnung (201) am äußeren Ende (207) der hinteren Stange (158) eingesetzt wird, welches äußere Ende der hinteren Stange in die hintere Öffnung der Seitenstange (156, 198) eingesetzt wird.

2. Venriegelbare Sicherheitsbox nach Patentanspruch 1, wobei der Sicherungsstift (210) durch die Öffnung am äußeren Ende der vorderen Stange (152) herausragt und in eine in einer Schlosseinheit (154) ausgebildeter Öffnung eingesetzt wird.

3. Venriegelbare Sicherheitsbox nach Patentanspruch 1, wobei die vordere Stange (152) einen Vaterabschnitt (170) mit einem Zahn (180) und einen Mutterabschnitt (160) mit einem Hohlraum (166) aufweist, der zur Aufnahme des Zahns des Vaterabschnitts vorgesehen ist.

4. Verriegelbare Sicherheitsbox nach Patentanspruch 1, wobei das Seitenpaneel (18) das Seitenpaneel (22) und das Seitenpaneel (20) gleitend hintergreift, um die Größe des Rahmens (10) einzustellen.

5. Verriegelbare Sicherheitsbox nach Patentanspruch 1, wobei die vordere Stange (1152) ein vergrößertes äußeres Ende (176) hat, um zu verhindern, dass die vordere Stange durch eine im Rahmen (10) ausgebildete Öffnung hindurchgleitet.

6. Verriegelbare Sicherheitsbox nach Patentanspruch 3, wobei die vordere Stange (152) eine erste Hülse (184) umfasst, um den Vaterabschnitt aufzunehmen (170) in betrieblichem Eingriff mit dem Mutterabschnitt (160) zu halten.

7. Verriegelbare Sicherheitsbox nach Patentanspruch 6, wobei die vordere Stange (152) eine zweite Hülse (188) zur Aufnahme der ersten Hülse (184) umfasst.

8. Verriegelbare Sicherheitsbox nach Patentanspruch 1, wobei der Rahmen (10) an einer Unterseite (284) eines Tisches (286) befestigt werden kann.

9. Verriegelbare Sicherheitsbox nach Patentanspruch 1, wobei der Rahmen (10) eine daran befestigte Bruchsicherung (280) aufweist.

10. Verriegelbare Sicherheitsbox nach Patentanspruch 1, wobei die vordere Stange (152), die hintere Stange (158) und die Seitenstange (156, 198) auf einer Außenseite des Rahmens (10) aneinander befestigt werden.

## Revendications

1. Coffret de sécurité verrouillable destiné à des ordinateurs, comprenant :
un cadre (10) comportant les panneaux latéraux (18, 20, 22, 24) qui présentent des ouvertures frontales opposées (36, 60, 282) y définies et des ouvertures postérieures opposées (40, 68) y définies ;
une tige frontale (152) insérée à travers les ouvertures frontales (36, 60, 282) définies dans les panneaux latéraux, la tige frontale (152) comportant une extrémité extérieure (167), l'extrémité extérieure (167) de la tige frontale (152) comportant une ouverture (164, 186) y définie ;
une tige arrière (158) insérée à travers les ouvertures postérieures (40, 68) définies dans les panneaux latéraux, la tige arrière (158) comportant une extrémité extérieure (207), l'extrémité extérieure (207) de la tige arrière (158) comportant une ouverture (201) y définie, et
une barre latérale (156, 198) comportant un goujon de blocage (210) faisant saillie vers l'extérieur, le goujon de blocage (210) étant inséré au travers de l'ouverture (164, 186) de l'extrémité extérieure de la tige frontale (152), la barre latérale comportant une ouverture postérieure (209) y définie et un goujon intérieur (208) faisant saillie vers l'intérieur dans la barre latérale, le goujon intérieur étant inséré au travers de l'ouverture (201) de l'extrémité extérieure (207) de la tige arrière (158), l'extrémité extérieure de la tige arrière étant insérée dans l'ouverture postérieure de la barre latérale (156, 198).

2. Coffret de sécurité verrouillable selon la revendication 1, dans lequel le goujon de blocage (210) fait saillie au travers de l'ouverture de l'extrémité extérieure de la tige frontale (152) et est inséré dans une ouverture (270) définie dans une unité de verrouillage (154).

3. Coffret de sécurité verrouillable selon la revendication 1, dans lequel la tige frontale (152) présente une section mâle (170) avec une dent (180) et une section femelle (160) avec une cavité (166) qui est adaptée à recevoir la dent de la section mâle.

4. Coffret de sécurité verrouillable selon la revendication 1, dans lequel le panneau latéral (18) vient en prise avec le panneau latéral (22) de manière glissante et le panneau latéral (20) sert à régler la dimension du cadre (10).

5. Coffret de sécurité verrouillable selon la revendication 1, dans lequel la barre frontale (152) présente une extrémité extérieure agrandie (176) afin d'empêcher que la barre frontale ne glisse à travers une ouverture définie dans le cadre (10).

6. Coffret de sécurité verrouillable selon la revendication 3, dans lequel la barre frontale (152) comprend un premier manchon (184) pour recevoir et tenir la section mâle (170) en prise opérationnelle avec la section femelle (160).

7. Coffret de sécurité verrouillable selon la revendication 6, dans lequel la barre frontale (152) comprend un second manchon (188) pour recevoir le premier manchon (184).

8. Coffret de sécurité verrouillable selon la revendication 1, dans lequel le cadre (10) peut être fixé à la surface inférieure (284) d'une table (286).

9. Coffret de sécurité verrouillable selon la revendication 1, dans lequel le cadre (10) présente un dispositif protecteur de rupture (280) y fixé.

10. Coffret de sécurité verrouillable selon la revendication 1, dans lequel la barre frontale (152), la barre arrière (158) et la barre latérale (156, 198) sont fixées les unes aux autres à l'extérieur du cadre (10).
